# EUROPEAN PATENT SPECIFICATION

(11) **EP 0 615 928 B1**
(45) Date of publication and mention of the grant of the patent: **02.10.1996**
(21) Application number: 94301836.6
(22) Date of filing: 15.03.1994
(51) Int. Cl.: B65G 33/04

(54) **Article transfer and processing assembly**
Vorrichtung zum Fördern und Verarbeiten von Gegenständen
Dispositif de transfert et de traitement d'articles

(30) Priority: 19.03.1993 GB 9305794
(43) Date of publication of application: 21.09.1994
(73) Proprietor: GRASEBY PRODUCT MONITORING LIMITED, Cambridge CB2 1LQ (GB)
(72) Inventor: Allan, James D.C., Bury St. Edmunds, Suffolk IP28 6QU (GB)
(74) Representative: Jackson, Derek Charles

(56) References cited:
- DE-A- 2 518 980
- GB-A- 1 448 858

## Description

The present invention relates to an article transfer and processing assembly which incorporates a rotating scroll transfer mechanism for individually transferring articles to be processed to a processing station, for example to a weighing station for weighing the article, the rotating scroll transfer mechanism being formed about its periphery with a groove.

Processing of an article is carried out at various phases during manufacture on a production line, for example filling and subsequent weighing, or checkweighing, of an article such as a canister containing a liquid material is often carried out to ensure that the weight of the contents of the canister are within a predetermined range. One problem that arises with processing operations, such as weighing or checkweighing, is that when the canister is deposited at a processing station it takes time for the canister and, where appropriate, its contents to settle in order for an operation to be carried out or for an acceptably reliable determination of the properties of the canister, and if necessary of its contents, to be made. In general, the problem is dependent upon the speed at which the canister is deposited at the processing station and, where the canister contains a liquid material, the problem is additionally dependent on the manner in which the canister is conveyed and the consequent agitation of the contents of the canister.

GB-A-1 271 085 describes a weighing apparatus in which a rotatable scroll device is used to transfer containers to and from a weighing device. Although an underweight container may be "topped-up", there is no disclosure of the problems associated with the need to allow the contents of the container to settle in order to obtain an acceptably reliable determination of the weight of the container to be made.

It is an object of the present invention to transfer an article, such as a canister containing a liquid material, to a processing station, such as a weighing station, in a manner which minimises the settling time of the article at the processing station.

According to the present invention there is provided an article transfer and processing assembly comprising a rotatable scroll device for individually transferring articles to be processed to an article processing station, the rotatable scroll device being formed about its periphery with a groove which is profiled so as to define a first groove portion for receiving an article to be transferred, a second groove portion communicating with the first groove portion for progressively increasing the transfer speed of the article to a predetermined speed, a third groove portion communicating with the second groove portion for conveying the article at the predetermined speed, and a fourth groove portion communicating with the third groove portion for permitting the article to decelerate onto the processing station under frictional forces, the maximum rate of deceleration being determined by the profile of the fourth groove portion.

The assembly may include a conveyor for conveying articles to be processed to the rotatable scroll device. A guide may be provided relative to the conveyor for directing articles towards the first groove portion.

The assembly may include a star wheel for removing processed articles from the processing station. Articles may be removed from the processing station to a conveyor. The conveyor for receiving processed articles may be the same as the conveyor for conveying articles to be processed.

The scroll device may be rotatable by way of a drive shaft engaging with one end thereof.

The processing station may comprise a weighing station.

The assembly may include an axially extending generally horizontal support for supporting articles being transferred by the scroll device. The assembly may include an axially extending generally upright support for retaining articles being transferred within the groove of the scroll device.

The first groove portion may have a zero pitch and progressively increasing depth. The second groove portion may have a progressively increasing pitch and constant depth. The third groove portion may have a constant pitch and constant depth. The fourth groove portion may have a progressively decreasing pitch and constant depth. The leading edge of the fourth groove portion, that is the edge nearest the processing station, may be removed over at least a part of the length thereof extending from the free end of the fourth groove portion towards the third groove portion. Additionally, where the leading edge of the fourth groove portion is removed over the entire length thereof, the leading edge of the third groove portion may be removed over at least a part of the length thereof.

For a better understanding of the present invention and to show more clearly how it may be carried into effect reference will now be made, by way of example, to the accompanying drawings in which:

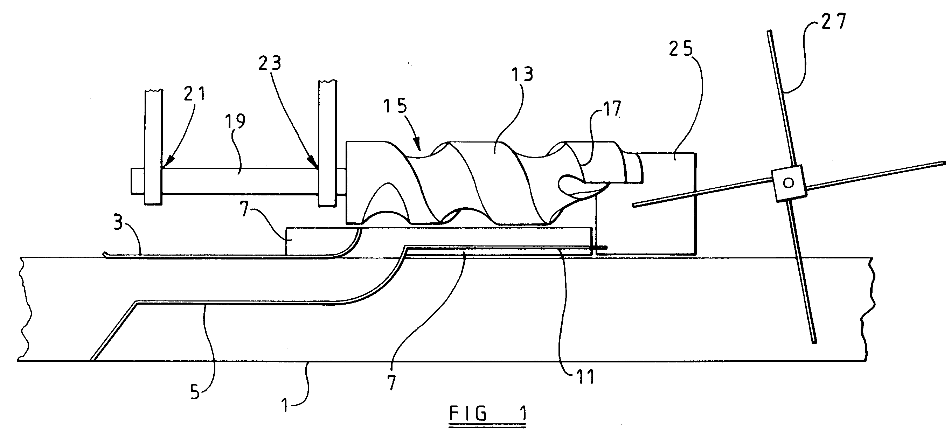

Figure 1 is a diagrammatic plan view of one embodiment of an article transfer and processing assembly according to the present invention in the form of an article transfer and weighing assembly;
Figure 2 is an elevational view of one embodiment of a scroll device for use in the article transfer and weighing assembly shown in Figure 1;
Figure 3 is an elevational view of the scroll device of Figure 2 taken in the direction of the arrow A in Figure 2;
Figure 4 is a cross-sectional view of the scroll device shown in Figures 2 and 3 taken along the line IV-IV in Figure 3;
Figure 5 is a graph of the groove depth against the number of turns for the scroll device shown in Figures 2, 3 and 4; and
Figure 6 is a graph of the groove pitch against the number of turns for the scroll device shown in Figures 2, 3 and 4.

The article transfer and weighing assembly shown in the drawings comprises a conveyor 1, such as a belt or slat conveyor, for conveying articles (not shown) to be weighed to the assembly and for conveying weighed articles away from the assembly. Articles that may be weighed with the assembly according to the present invention include aluminium aerosol cans and vials made of plastics or glass. Positioned above the conveyor 1 is an article receiving guide which comprises two guide plates 3, 5 which will be described in more detail hereinafter. Positioned alongside the conveyor 1 and passing beneath the guide plate 3 is a skid plate 7 for the articles to be weighed. Extending from an end of the guide plate 5 in an upright manner along that side of the skid plate 7 adjacent to the conveyor belt 1 is a guide plate 11 to assist in guiding the articles along the skid plate 7.

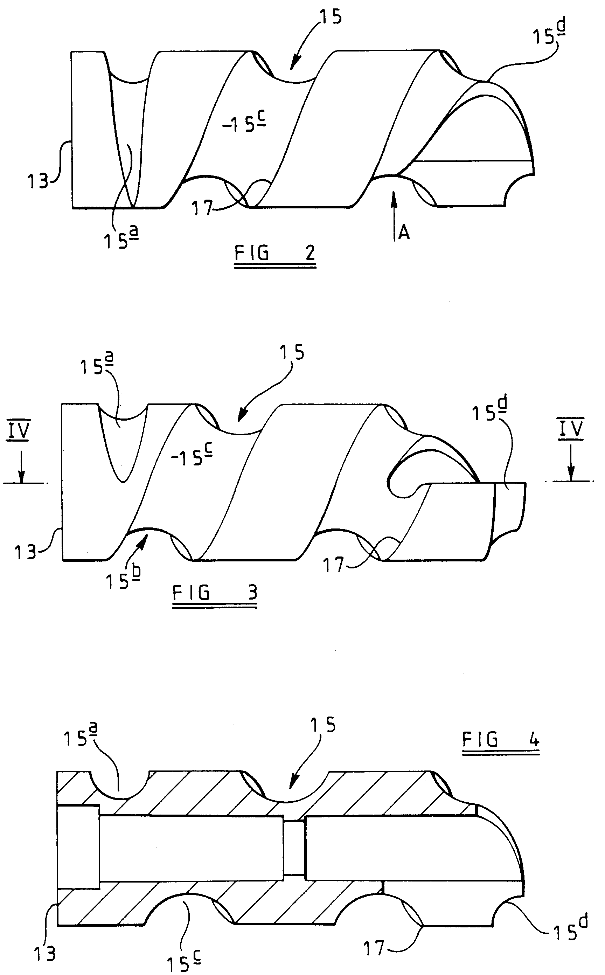

Articles within the article receiving guide are urged, by movement of the conveyor 1, towards a rotatable scroll device 13. As can be seen more clearly from Figures 2 to 4, the scroll device is formed with a groove 15 which extends initially in groove portion 15a in the peripheral direction of the device (i.e. with zero pitch) with a progressively increasing depth of groove. Subsequently, the groove is provided in groove portion 15b with an axial component at constant depth, the pitch of which groove portion increases progressively up to a predetermined value. Thereafter, the groove portion is provided with a groove portion 15c having a constant depth and a constant pitch. Finally, the groove is provided in groove portion 15d with an axial component, the pitch of which decreases progressively from the predetermined value to zero. Over at least a part of the groove portion 15d, and optionally over a part of the groove portion 15c, the leading edge 17 of the groove is removed.

The scroll device 13 may be made of any suitable material, but we have found thermoplastics materials, such as acetal materials sold under the trade name DELRIN, can provide suitable properties for the scroll device combined with an adequate level of machinability.

The height of the axis of the scroll device 13 relative to the skid plate 7 is such that the scroll device engages with the articles to be transferred in the region of the centre of mass thereof.

The scroll device 13 is in practice in the form of a hollow cylinder rotatably supported at or towards one end thereof by way of a drive shaft 19, driven by means not shown, mounted in bearings 21 and 23.

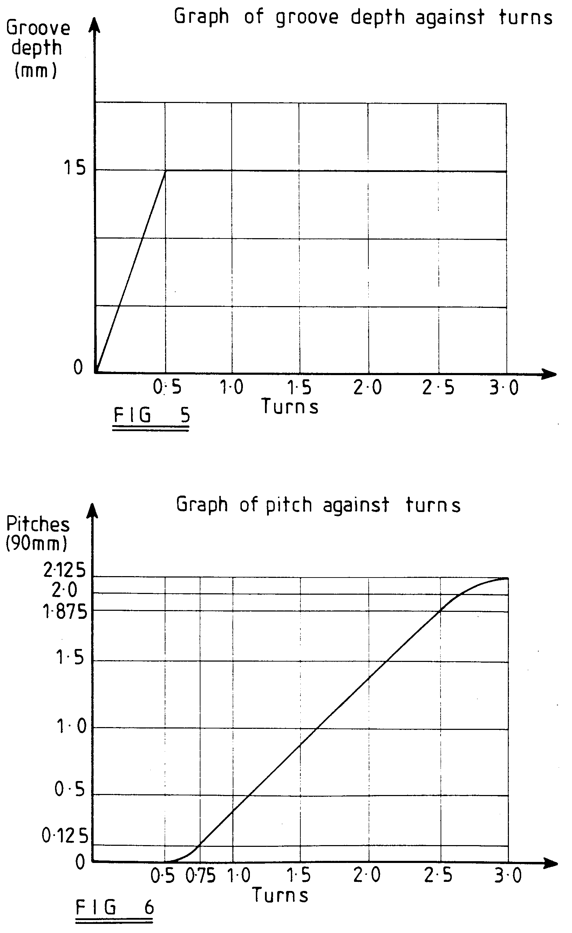

The scroll device is shown in more detail in Figures 2, 3 and 4 and the characteristics of the groove are set out in the graphs of Figures 5 and 6. As can be seen from Figures 2 to 6, the groove (groove portion 15a) has a zero pitch over the first half (0.5) turn with the depth of the groove increasing linearly throughout the length of the groove portion to a maximum depth of, say, 15 mm and to a width of, say, 28 mm. In groove portion 15b, the pitch increases progressively to a constant value over the next quarter (0.25) turn with the depth of the groove remaining constant. In groove portion 15c, the pitch remains constant for some one and three quarter (1.75) turns. In groove portion 15d, the pitch decreases progressively over the last half (0.5) turn, with the effective depth of the groove remaining constant. Clearly, the precise details of the groove can be varied without the requirement for any inventive activity. Thus the initial groove portion 15a could have a greater or lesser extent, the intermediate groove portion 15b could have a steeper or lesser gradient, or a greater or lesser extent, the groove portion 15c where the pitch is constant could be longer or shorter and could have a different pitch, and the final groove portion 15d could have a steeper or lesser gradient, or a greater or lesser extent. Additionally, the diameter of the scroll device can be increased or decreased if necessary.

As can be seen from Figures 2, 3 and 4 of the drawings, the leading edge 17 of the groove 15 is removed in the groove portion 15d and in a part of the groove portion 15c. This is to allow the articles to slow of their own accord due to friction rather than to enforce a deceleration onto the articles, whilst at the same time determining the maximum rate of deceleration of the articles.

Articles exiting the groove 15 of the scroll device 13 are deposited one at a time on a weigh plate 25 of a weighing station which is not shown in detail, but the construction and operation of which is well known to the skilled person. After a predetermined settling time, the weight of the article is determined and if the weight of the article is not within a predetermined range the article is flagged for subsequent removal. After weighing, the article is moved off the weigh plate 25 by a star wheel 27 and is transferred to the conveyor 1 for subsequent removal or further processing. Rotation of the star wheel 27 is coordinated with the rotation of the scroll device 13 by means (not shown) readily available to the skilled person in order to remove the article as soon as it has been weighed and in order that the star wheel, which may need to occupy the same space as that occupied from time to time by the scroll device, does not impact with the scroll device.

In operation of the article transfer and weighing assembly shown in, and described with reference to, the drawings, a plurality of articles to be transferred and weighed are conveyed by the conveyor 1 to the two guide plates 3 and 5. Guide plate 3 prevents the articles falling off one side of the conveyor 1, while guide plate 5 is formed at one end thereof with an inclined portion to guide the articles towards the guide plate 3 and along a path between the guide plates 3 and 5. Towards the ends of the guide plates 3 and 5 remote from the inclined portion, the guide plates are curved so as to convey the articles in a direction towards the scroll device 13.

The articles are urged one at a time, due to movement of the conveyor 1 and pressure from following articles, into the initial groove portion 15a such that the article moves towards the axis of the scroll device 13 and on to the skid plate 7. After the article has entered the groove portion 15a, it is accelerated along the skid plate 7, with the assistance of guide plate 11, by the groove portion 15b. Once the article has been accelerated, it is carried at substantially constant speed in groove portion 15c and this is believed to contribute to the settling of the article and, more especially, its contents. Finally, the article is allowed to decelerate in the groove portion 15d under its own frictional forces due to the progressive reduction in the pitch of the groove portion 15d and the removal of the leading edge of the groove 15. Should the article decelerate too quickly, the progressive decrease in the pitch of the groove ensures that a maximum rate of deceleration is not exceeded and that the article is transferred onto the weigh plate.

The article therefore exits the groove 15 on to the weigh plate 25 in a relatively settled state and requires a relatively short time before the weight of the article can be determined. Once the article has been weighed, it is removed from the weigh plate 25 and onto the conveyor 1 by star wheel 27 so that the article can subsequently be removed from the production line or can proceed to further processing.

We have found that the use of the scroll device 13 to transfer the articles to the weigh plate 25 can take longer to accomplish the transfer as compared with conventional means such as a star wheel. This is due to the time taken for the articles to decelerate under the influence of friction in the final groove portion 15d of the groove 15 where the pitch of the groove progressively decreases and where the leading edge 17 is removed so as to avoid forced deceleration. On the other hand, we have found that the time required for the article and its contents to settle once the article has been deposited on the weigh plate 25 are significantly reduced to the extent that the overall time to accomplish the transfer, allow for settling and determine the weight of the canister is less than with conventional means such as a star wheel. Thus the article transfer and assessing assembly according to the present invention permits a greater throughput of articles than conventional means.

## Claims

1. An article transfer and processing assembly comprising a rotatable scroll device (13) for individually transferring articles to be processed to an article processing station (25), the rotatable scroll device being formed about its periphery with a groove (15), characterised in that the groove (15) is profiled so as to define a first groove portion (15a) for receiving an article to be transferred, a second groove portion (15b) communicating with the first groove portion for progressively increasing the transfer speed of the article to a predetermined speed, a third groove portion (15c) communicating with the second groove portion for conveying the article at the predetermined speed, and a fourth groove portion (15d) communicating with the third groove portion for permitting the article to decelerate onto the processing station (25) under frictional forces, the maximum rate of deceleration being determined by the profile of the fourth groove portion (15d).

2. An assembly as claimed in claim 1, characterised in that the assembly includes a conveyor (1) for conveying articles to be processed to the rotatable scroll device (15).

3. An assembly as claimed in claim 2, characterised in that a guide (5) is provided relative to the conveyor (1) for directing articles towards the first groove portion (15a).

4. An assembly as claimed in any preceding claim, characterised in that the assembly includes a star wheel (27) for removing processed articles from the processing station (25).

5. An assembly as claimed in claim 4, characterised in that articles are removed from the processing station (25) to a conveyor.

6. An assembly as claimed in claim 5 when dependent on claim 2, characterised in that the conveyor (1) for receiving processed articles is the same as the conveyor (1) for conveying articles to be processed.

7. An assembly as claimed in any preceding claim, characterised in that the scroll device (13) is rotatable by way of a drive shaft (19) engaging with one end thereof.

8. An assembly as claimed in any preceding claim, characterised in that the processing station (25) comprises a weighing station.

9. An assembly as claimed in any preceding claim, characterised in that an axially extending generally horizontal support (7) is provided for supporting articles being transferred by the scroll device (13).

10. An assembly as claimed in any preceding claim, characterised in that an axially extending generally upright support (11) is provided for retaining articles being transferred within the groove (15) of the scroll device (13).

11. An assembly as claimed in any preceding claim, characterised in that the first groove portion (15a) has a zero pitch and progressively increasing depth.

12. An assembly as claimed in any preceding claim, characterised in that the second groove portion (15b) has a progressively increasing pitch and constant depth.

13. An assembly as claimed in any preceding claim, characterised in that the third groove portion (15c) has a constant pitch and constant depth.

14. An assembly as claimed in any preceding claim, characterised in that the fourth groove portion (15d) has a progressively decreasing pitch and constant depth.

15. An assembly as claimed in any preceding claim, characterised in that the leading edge (17) of the fourth groove portion (15d), that is the edge nearest the processing station (25), is removed over at least a part of the length thereof extending from the free end of the fourth groove portion towards the third groove portion (15c).

16. An assembly as claimed in claim 15, characterised in that, where the leading edge (17) of the fourth groove portion (15d) is removed over the entire length thereof, the leading edge (17) of the third groove portion (15c) is removed over at least a part of the length thereof.

## Patentansprüche

1. Artikeltransport- und -bearbeitungsanlage, umfassend eine drehbare Schneckenvorrichtung (13) für den individuellen Transport von zu bearbeitenden Artikeln zu einer Artikelbearbeitungsstation (25), wobei die drehbare Schneckenvorrichtung um ihre Peripherie mit einer Nut (15) versehen ist, dadurch gekennzeichnet, daß die Nut (15) so profiliert ist, daß sie einen ersten Nutabschnitt (15a) zur Aufnahme eines zu transportierenden Artikels, einen zweiten, mit dem ersten Abschnitt in Verbindung stehenden Nutabschnitt (15b) zum progressiven Erhöhen der Transportgeschwindigkeit des Artikels auf eine vorbestimmte Geschwindigkeit, einen dritten, mit dem zweiten Nutabschnitt in Verbindung stehenden Nutabschnitt (15c) zum Fördern des Artikels mit der vorbestimmten Geschwindigkeit und einen vierten, mit dem dritten Nutabschnitt in Verbindung stehenden Nutabschnitt (15d) definiert, der eine Verlangsamung des Artikels auf die Bearbeitungsstation (25) unter Friktionskräften ermöglicht, wobei die maximale Verlangsamungsrate durch das Profil des vierten Nutabschnitts (15d) bestimmt wird.

2. Anlage nach Anspruch 1, dadurch gekennzeichnet, daß die Anlage einen Förderer (1) zum Fördern von zu bearbeitenden Artikeln zu der drehbaren Schneckenvorrichtung (15) beinhaltet.

3. Anlage nach Anspruch 2, dadurch gekennzeichnet, daß eine Führung (5) relativ zu dem Förderer (1) zum Leiten von Artikel zu dem ersten Nutabschnitt (15a) hin vorgesehen ist.

4. Anlage nach einem der vorhergehenden Ansprüche, dadurch gekennzeichnet, daß die Anlage ein Sternrad (27) zum Wegführen von bearbeiteten Artikeln aus der Bearbeitungsstation (25) beinhaltet.

5. Anlage nach Anspruch 4, dadurch gekennzeichnet, daß Artikel von der Bearbeitungsstation (25) auf einen Förderer weggeführt werden.

6. Anlage nach Anspruch 5 in Abhängigkeit von Anspruch 2, dadurch gekennzeichnet, daß der Förderer (1) zur Aufnahme von bearbeiteten Artikeln derselbe ist wie der Förderer (1) zum Fördern von zu bearbeitenden Artikeln.

7. Anlage nach einem der vorhergehenden Ansprüche, dadurch gekennzeichnet, daß die Schneckenvorrichtung (13) mit Hilfe einer in eines ihrer Enden eingreifenden Antriebswelle (19) drehbar ist.

8. Anlage nach einem der vorhergehenden Ansprüche, dadurch gekennzeichnet, daß die Bearbeitungsstation (25) eine Wägestation umfaßt.

9. Anlage nach einem der vorhergehenden Ansprüche, dadurch gekennzeichnet, daß eine axial verlaufende, allgemein horizontale Tragvorrichtung (7) zum Tragen von durch die Schneckenvorrichtung (13) transportierten Artikeln vorgesehen ist.

10. Anlage nach einem der vorhergehenden Ansprüche, dadurch gekennzeichnet, daß eine axial verlaufende, allgemein aufrechte Tragvorrichtung (11) zum Festhalten von in der Nut (15) der Schneckenvorrichtung (13) transportierten Artikel vorgesehen ist.

11. Anlage nach einem der vorhergehenden Ansprüche, dadurch gekennzeichnet, daß der erste Nutabschnitt (15a) eine Steigung von Null und eine progressiv zunehmende Tiefe hat.

12. Anlage nach einem der vorhergehenden Ansprüche, dadurch gekennzeichnet, daß der zweite Nutabschnitt (15b) eine progressiv zunehmende Steigung und eine konstante Tiefe hat.

13. Anlage nach einem der vorhergehenden Ansprüche, dadurch gekennzeichnet, daß der dritte Nutabschnitt (15c) eine konstante Steigung und eine konstante Tiefe hat.

14. Anlage nach einem der vorhergehenden Ansprüche, dadurch gekennzeichnet, daß der vierte Nutabschnitt (15d) eine progressiv abnehmende Steigung und eine konstante Tiefe hat.

15. Anlage nach einem der vorhergehenden Ansprüche, dadurch gekennzeichnet, daß die Vorderkante (17) des vierten Nutabschnittes (15d), d.h. der der Bearbeitungsstation (25) am nächsten liegende Kante, über wenigstens einen Teil seiner vom freien Ende des vierten Nutabschnitts in Richtung des dritten Nutabschnitts (15c) verlaufenden Länge entfernt ist.

16. Anlage nach Anspruch 15, dadurch gekennzeichnet, daß dort, wo die Vorderkante (17) des vierten Nutabschnitts (15d) über seine gesamte Länge entfernt ist, die Vorderkante (17) des dritten Nutabschnitts (15c) über wenigstens einen Teil seiner Länge entfernt ist.

## Revendications

1. Ensemble de transfert et de traitement d'articles comprenant un dispositif hélicoïdal rotatif (13) pour transférer individuellement des articles à traiter à une station de traitement des articles (25), le dispositif hélicoïdal rotatif comportant à sa périphérie une rainure (15), caractérisé en ce que la rainure (15) est profilée de manière à définir une première partie de rainure (15a) pour recevoir un article à transférer, une deuxième partie de rainure (15b) communiquant avec la première partie de rainure pour augmenter progressivement la vitesse de transfert de l'article jusqu'à une vitesse prédéterminée, une troisième partie de rainure (15c) communiquant avec la deuxième partie de rainure pour transporter l'article à la vitesse prédéterminée, et une quatrième partie de rainure (15d) communiquant avec la troisième partie de rainure pour permettre à l'article de décélérer sur la station de traitement (25) sous l'effet des forces de frottement, la décélération maximale étant déterminée par le profil de la quatrième partie de rainure (15d).

2. Ensemble selon la revendication 1, caractérisé en ce que l'ensemble comprend un transporteur (1) pour transporter les articles à traiter au dispositif hélicoïdal rotatif (15).

3. Ensemble selon la revendication 2, caractérisé en ce qu'un guide (5) est prévu par rapport au transporteur (1) pour diriger les articles vers la première partie de rainure (15a).

4. Ensemble selon l'une quelconque des revendications précédentes, caractérisé en ce que l'ensemble comprend une roue en étoile (27) pour enlever les articles traités de la station de traitement (25).

5. Ensemble selon la revendication 4, caractérisé en ce que les articles sont enlevés de la station de traitement (25) vers un transporteur.

6. Ensemble selon la revendication 5 lorsqu'elle dépend de la revendication 2, caractérisé en ce que le transporteur (1) pour recevoir les articles traités est le même que le transporteur (1) pour transporter les articles à traiter.

7. Ensemble selon l'une quelconque des revendications précédentes, caractérisé en ce que le dispositif hélicoïdal (13) est entraîné en rotation au moyen d'un arbre de commande (19) engagé avec une de ses extrémités.

8. Ensemble selon l'une quelconque des revendications précédentes, caractérisé en ce que la station de traitement (25) comprend une station de pesage.

9. Ensemble selon l'une quelconque des revendications précédentes, caractérisé en ce qu'un support à orientation générale horizontale et disposé axialement (7) est prévu pour supporter les articles transférés par le dispositif hélicoïdal (13).

10. Ensemble selon l'une quelconque des revendications précédentes, caractérisé en ce qu'un support à orientation générale verticale et disposé axialement (11) est prévu pour retenir les articles transférés à l'intérieur de la rainure (15) du dispositif hélicoïdal (13).

11. Ensemble selon l'une quelconque des revendications précédentes, caractérisé en ce que la première partie de rainure (15a) a un pas nul et une profondeur augmentant progressivement.

12. Ensemble selon l'une quelconque des revendications précédentes, caractérisé en ce que la deuxième partie de rainure (15b) a un pas augmentant progressivement et une profondeur constante.

13. Ensemble selon l'une quelconque des revendications précédentes, caractérisé en ce que la troisième partie de rainure (15c) a un pas constant et une profondeur constante.

14. Ensemble selon l'une quelconque des revendications précédentes, caractérisé en ce que la quatrième partie de rainure (15d) a un pas diminuant progressivement et une profondeur constante.

15. Ensemble selon l'une quelconque des revendications précédentes, caractérisé en ce que le bord avant (17) de la quatrième partie de rainure (15d), qui est le bord le plus proche de la station de traitement (25), est supprimé sur au moins une partie de sa longueur qui s'étend de l'extrémité libre de la quatrième partie de rainure vers la troisième partie de rainure (15c).

16. Ensemble selon la revendication 15, caractérisé en ce que, lorsque le bord avant (17) de la quatrième partie de rainure (15d) est supprimé sur toute sa longueur, le bord avant (17) de la troisième partie de rainure (15c) est supprimé sur au moins une partie de sa longueur.
